# EUROPÄISCHE PATENTSCHRIFT

(11) **EP 3 176 342 B1**
(45) Veröffentlichungstag und Bekanntmachung des Hinweises auf die Patenterteilung: **13.12.2017**
(21) Anmeldenummer: 15197752.7
(22) Anmeldetag: 03.12.2015
(51) Int. Cl.: E04D 13/00, G01M 3/16, G01M 3/04

(54) **VERFAHREN ZUR VERLEGUNG EINER FEUCHTIGKEITSDETEKTIONSVORRICHTUNG IN DÄCHERN VON GEBÄUDEN, INSBESONDERE FLACHDÄCHER**
METHOD FOR LAYING A MOISTURE DETECTION DEVICE IN ROOFS OF BUILDINGS, IN PARTICULAR FLAT ROOFS
PROCÉDÉ DE POSE D'UN DISPOSITIF DE DÉTECTION D'HUMIDITÉ DANS DES TOITS DE BATIMENTS EN PARTICULIER DES TOITS PLATS

(43) Veröffentlichungstag der Anmeldung: 07.06.2017
(73) Patentinhaber: Fleischmann & Petschnig Dachdeckungs-Gesellschaft m.b.H., 9020 Klagenfurt (AT)
(72) Erfinder: Petschnig, Otmar, 9023 Klagenfurt (AT); Eusch, Ingram, 9500 Villach (AT); Schelflinger, Horst, 9722 Gummem (AT)
(74) Vertreter: Schweiger, Johannes

(56) Entgegenhaltungen:
- EP-A1- 0 325 665
- WO-A1-2009/023956

## Beschreibung

Die vorliegende Erfindung betrifft ein Verfahren zur Verlegung einer Feuchtigkeitsdetektionsvorrichtung in Dächern von Gebäuden, insbesondere Flachdächern.

Ein Gebäudedach, insbesondere ein Flachdach, ist typischerweise wie folgt aufgebaut (von oben nach unten):
- Obere Dachhaut/Abdichtungsbahn (zum Beispiel aus Blech, Bitumen, Schiefer, Kunststoff)
- Wärmedämmung (zum Beispiel aus Mineralwolle oder Kunststoff)
- Dampfsperre (zum Beispiel auf Bitumenbasis)

Soweit nachstehend nichts anderes angegeben ist, wird von diesem grundsätzlichen Aufbau ausgegangen, ohne die Erfindung jedoch auf die Anwendung für ein so gestaltetes Dach bzw. Flachdach zu beschränken.

Die Dampfsperre des Dachs bzw. Flachdachs liegt zum Beispiel auf der Gebäudedecke (zum Beispiel aus Beton) auf.

Obwohl Dächer, insbesondere Flachdächer, dieser Art seit Jahrzehnten im privaten und gewerblichen Bereich eingesetzt und laufend verbessert werden, bleibt ein grundsätzliches Problem: das Dach muss oft Temperaturen von ≥ 50 °C ebenso aushalten wie Temperaturen von ≤ minus 20 °C. Es muss Windlasten, Schneelasten, Regenlasten ebenso widerstehen wie mechanischen Beanspruchungen durch Dachaufbauten und Fremdteile, die auf das Dach fallen.

Insbesondere thermische und/oder mechanische Spannungen im Dach führen oft zu Undichtigkeiten/Rissen. In der Folge dringen Wasser und Fremdkörper in das Dach ein. Eindringendes Wasser verteilt sich und ist extrem schwer zu detektieren, oft erst nach längeren Zeitintervallen, wenn das Dach schon weitgehend beschädigt ist. Besonders kritisch ist Feuchtigkeit im Bereich der Wärmedämmung.

Die DE 3600374 C2 schlägt eine Vorrichtung zur Detektion von Wasserschäden durch Kondensatbildung und Leckagen an Flachdächern vor, wobei auf dem Flachdach Wasser-/Feuchtigkeitssensoren in zugehörigen Messgehäusen montiert werden. Dieses System ist konstruktiv aufwändig.

Die EP 0325665 A1 und WO 2009/023956 A1 schlagen vor, unisolierte elektrische Leiter kreuzweise auf einer Dachfläche zu verlegen und an Kreuzungspunkten zu isolieren sowie durch Messung des Ohm'schen Widerstands Feuchtigkeit zu detektieren.

Der Erfindung liegt die Aufgabe zu Grunde, ein einfache und zuverlässige Möglichkeit zur Feuchtigkeitsdetektion in Dächern von Gebäuden, insbesondere Flachdächern, anzugeben.

Diese Aufgabe wird mit einem Verfahren gemäß Anspruch 1 gelöst.

Der Begriff "Litze" steht stellvertretend für drahtartige oder kabelartige Elemente, die eine elektrische Leitfähigkeit besitzen. Insbesondere definiert der Begriff Litze die Geometrie des Detektionselements dahingehend, dass es sich um schmale, längliche, drahtartige Elemente handelt, deren Durchmesser beispielsweise 0,2 bis 3mm beträgt.

Die Doppellitze besteht aus zwei Einzellitzen (im Weiteren auch einfach nur Litzen genannt) auf. Die Litzen einer Doppellitze verlaufen parallel zueinander entlang einer Längsachse/Erstreckungsachse. Im Folgenden wird mit dem Ausdruck "axial" auf diese Längsachsen der Litzen Bezug genommen. Die Einzellitzen der Doppellitze sind senkrecht in Bezug auf die Erstreckungsachse voneinander beabstandet.

Die Litzen sind vergleichsweise leicht zu biegen. Daher können Litzen auch mechanische Belastungen aufnehmen. Die Einzeldrähte bestehen aus elektrisch leitfähigen Materialien wie Kupfer. Jede Litze ist durch eine elektrische Isolierung (Isolierhülle, Ummantelung) umschlossen, um eine permanente elektrische Verbindung oder einen Kurzschluss zwischen benachbarten Litzen zu verhindern. Die Einzellitzen der Doppellitze können auch zu einem gemeinsamen Element (Litze) in einem gemeinsamen Isolierkörper mit Abstand zueinander angeordnet werden, ähnlich wie ein Elektrokabel mit 2 isolierten Leitern.

Die Litzen werden so verlegt, dass nicht isolierte Bereiche benachbarter Litzen in Axialrichtung der Litzen axial versetzt zueinander angeordnet sind, das heißt, die nicht isolierten Bereiche liegen nicht unmittelbar nebeneinander und haben keine direkten Kontakt. Dadurch werden unbeabsichtigte Kurzschlüsse verhindert und die Zuverlässigkeit einer Feuchtigkeitsanzeige erhöht. Die Messgenauigkeit lässt sich durch den axialen Abstand einstellen, den die nicht isolierten Abschnitte zusammenwirkender (Einzel)Litzen aufweisen. Üblicherweise braucht dieser Abstand nur wenige Zentimeter (1-50cm oder 5-20cm) betragen.

Wesentlich für die Erfindung ist, dass die Litzen in den Detektionsbereichen nicht isolierte (abisolierte) Bereiche aufweisen.

Abisoliert bedeutet, dass die Isolierhülle(n) zumindest teilweise entfernt bzw. nicht vorhanden ist (sind), Mit anderen Worten: Die Litzen sind an den "abisolierten" Stellen sensibel gegenüber Feuchtigkeit und in den dazwischen angeordneten Bereichen nicht. Dadurch kann bei Auftreten von Feuchtigkeit eine elektrische Verbindung zwischen benachbarten, nicht isolierten Bereichen von zwei korrespondierenden Litzen hergestellt werden. Somit ist es möglich, dass die Existenz von Feuchtigkeit bzw. Wasser zum Beispiel über die Messung von Widerständen, Strömen, Spannungen und/oder elektrischen Leitfähigkeiten an den Litzen detektiert wird.

Durch die Verlegung der Litzen (mit einem vorher festgelegten Raster/Muster) auf beziehungsweise in einem Dach wird das Dach mit einer bestimmten Zahl und Position von Detektionsbereichen versehen, so dass Feuchtigkeit (beispielsweise Wasser, Wasserdampf, Kondensat) im Dach vergleichsweise exakt lokalisiert werden kann. Beispiele dazu werden nachstehend angegeben.

Außerdem kann eine stetige Überwachung des Daches erfolgen (sogenanntes Monitoring). Die Verlegung kann bereits bei der Herstellung des Daches erfolgen, so dass eine nachträgliche Veränderung bzw. ein nachträglicher Umbau des Daches nicht erforderlich ist.

Außerdem halten die Litzen auch Windlasten, Schneelasten, Regenlasten und anderen mechanischen Beanspruchungen durch Dachaufbauten und Fremdteile stand. Weiterhin können thermische und/oder mechanische Spannungen im Dach von den Litzen aufgenommen werden.

Die Anzahl der Detektionsbereiche und deren, Verteilung richten sich insbesondere nach den Gegebenheiten bzw. der Beschaffenheit des Daches. Je mehr Detektionsbereiche angeordnet werden und/oder je geringer der Abstand zwischen den Detektionsbereichen gewählt wird, umso genauer kann eine beschädigte Stelle (ein feuchte Stelle) im Dach lokalisiert werden.

Die Detektionsbereiche bzw. die Litzen werden insbesondere im Dach und zwar insbesondere oberhalb der Dampfsperre und/oder innerhalb der Wärmedämmung und/oder unterhalb der oberen Dachabdeckung angeordnet. Ebenso können die Detektionsbereiche an Stellen im Dach angeordnet werden, die für Feuchtigkeit besonders anfällig sind (zum Beispiel an oder in der Nähe von Stellen, wo Wasser abfließt, Dachaufbauten, Dachfenster usw.).

Die Erfindung schlägt vor, das Messsystem durch eine oder mehrere folgender Varianten zu optimieren:
- Die Detektionsbereiche werden in einer gemeinsamen (meist horizontalen) Ebene angeordnet werden. Dadurch wird eine gleichmäßige Detektion von Feuchtigkeit über die zu überwachende Fläche erreicht.
- Die Detektionsbereiche werden in einer gemeinsamen Ebene parallel zur Oberfläche des Gebäudedaches angeordnet.
- Mehrere Doppellitzen werden parallel mit Abstand zueinander angeordnet. Der Abstand kann beispielsweise 0,1 bis 3m betragen.
- Die Doppellitzen werden kreuzweise so verlegt, dass ihre isolierten Abschnitte an Kreuzungsstellen übereinanderliegen. Dadurch lassen sich Feuchtigkeitsbereiche lokal sehr genau orten. Dabei können die sich kreuzenden Litzen unmittelbar übereinander liegen oder einen vertikalen

Abstand zueinander aufweisen, beispielsweise 1 bis 20cm. Die kreuzweise Verlegung kann im rechten Winkel erfolgen, so dass zwischen den Kreuzungsstellen der Litzen/Litzen rechteckige Flächen gebildet werden.
- Es werden Litzen verwendet, deren nicht isolierte Abschnitte in Axialrichtung der jeweiligen Litze einen Abstand zwischen 0,5 und 5m aufweisen. Durch den Abstand lässt sich der Detektionsbereich und der Abstand zwischen Detektionsbereichen einstellen.
- Die nicht isolierten Abschnitte weisen in Axialrichtung der jeweiligen Litze eine Länge zwischen 0,01 und 0,25m auf. Die Fläche der nicht isolierten Abschnitte beträgt größenordnungsmäßig oft 0,1 bis 10mm². Je nach Größe lässt sich die Sensibilität zur Erfassung einer feuchten Stelle justieren.
- Es werden Litzen verwendet, deren nicht isolierte Abschnitte von diskreten Unterbrechungen in einer zugehörigen Isolierung der Litze gebildet werden. Dies kann einfach dadurch erfolgen, dass die
- Umhüllung/Isolierung mit einem Messer an einem oder mehreren Stellen weggeschnitten wird. Der nicht isolierte Abschnitt hat dann die Form eines "Lochs". Alternativ kann die Isolierung auch an einer Stelle umfangsseitig komplett weggenommen werden.

Die Litzen sind erfindungsgemäß mit einer Auswerteeinrichtung verbunden, die beispielsweise elektrische Widerstände, Ströme, Spannungen und/oder Leitfähigkeiten in den Litzen und/oder Detektionsbereichen misst, wobei die Auswerteeinrichtung in Abhängigkeit von diesen Messwerten Feuchtigkeit in den Detektionsbereichen detektiert.

Sobald Feuchtigkeit bzw. Wasser in einem Detektionsbereich (also im Bereich zweier benachbarter abisolierter Bereiche zweier benachbarter Litzen) auftritt, kann beispielsweise ein messbarer Widerstand entstehen, der mit der Auswerteeinrichtung festgestellt werden kann. Die Stelle, an der dieser Widerstand gemessen wird, kann zum Beispiel eine beschädigte Stelle im Dach sein, bzw. auf eine solche beschädigte Stelle hinweisen, so dass eine Beschädigung im Dach relativ genau lokalisiert werden kann. Dies erleichtert erstens die Überwachung des Daches und zweitens die Bestimmung der schadhaften Stelle, so dass das beschädigte Dach vergleichsweise einfach, schnell und kostengünstig repariert werden kann.

Die Auswerteeinrichtung (Datenverarbeitungsanlage) kann Messwerte aus der Vergangenheit speichern und diese mit aktuellen Messwerten vergleichen, um anhand dieses Vergleichs Feuchtigkeit im Dach (in einem oder mehreren Detektionsbereichen) zu erfassen (detektieren).

Das Dach kann ständig überwacht werden, wobei die ermittelten Messwerte gespeichert werden können. Sollte beispielsweise ein aktueller Messwert von den Messwerten der Vergangenheit abweichen, so könnte dies auf eine beschädigte Stelle im Dach hinweisen. Außerdem können die Messwerte der Vergangenheit Aufschluss darüber geben, wie sich die gemessenen Parameter im Laufe der Zeit verändert haben. Dadurch ist eine zuverlässige Überwachung des Daches möglich, außerdem können Fehlalarme weitgehend verhindert werden.

Es können beliebig viele Detektionsstellen in einem Dach oder entlang eines Daches eingerichtet werden; beispielsweise >10, >20 oder >50 Detektionsbereiche, bei großen Dächern auch >100 oder >200 Detektionsbereiche. Pro Quadratmeter Dachfläche können beispielsweise 1 bis 3 oder mehr Detektionsbereiche angeordnet werden.

Der Abstand zwischen den einzelnen Detektionsbereichen kann unterschiedlich sein, die Detektionsbereiche können aber auch gleichmäßig voneinander beabstandet sein. Insbesondere können die Detektionsbereiche rasterförmig angeordnet werden. Der Rasterabstand, d.h. der Abstand zwischen benachbarten Detektionsbereichen, kann beispielhaft zwischen 0,5m und 5,0m liegen, mit einem unteren Wert alternativ bei 1,0m oder 1,5m und einem oberen Wert bei 2,0m oder 3,5m.

Die Anordnung der Litzen/Litzen entlang eines Dachs lässt sich anwendungsspezifisch einstellen und hängt beispielsweise davon ab, ob Dachbalken (Sparren) oder Dacheinbauten vorhanden sind, die berücksichtigt werden müssen, ob das Dach geneigt oder ein Flachdach ist etc.

Weitere Ausführungsformen sind durch folgende Merkmale, einzeln oder in Kombination, charakterisiert:
- Die kreuzweise Verlegung erfolgt so, dass rhombenartige Flächen zwischen den korrespondierenden Litzen gebildet werden.
- Die Litzen werden in Schlitzen/Vertiefungen verlegt, die beispielsweise in der Dachdämmung vorbereitet wurden. Sie können ebenso auf der Dampfsperre und/oder in der Wärmedämmung des Dachs verlegt werden.
- Die Zahl der abisolierten Stellen entlang einer Litze richtet sich danach, wie eng das Detektionsraster sein soll. Es beträgt beispielsweise 10cm bis 100cm, wobei der untere Wert auch bei 20cm, oder 50cm und der obere Wert bei 300cm, 500cm oder 1000cm liegen kann.

Die Erfindung lässt sich auch auf sogenannte Segmentdächer anwenden, die aus vorgefertigten Bauteilen zusammengesetzt sind. In diesem Fall können die Litzen bereits vorab in den einzelnen Segmenten/Bauteilen verlegt werden. Die Litzenstücke werden dann bei der Konfektionierung der Segmente zu einem Dach durch Adapter elektrisch verbunden, wobei die Adapter benachbarte Segmente gleichzeitig mechanisch verbinden können.

Die Erfindung wird nachstehend anhand von Ausführungsbeispielen näher beschrieben. Dabei zeigen, jeweils in stark schematisierter Darstellung:
Figur 1: eine Litze für eine Feuchtigkeitsdetektionsvorrichtung.
Figur 2: eine Ansicht einer Feuchtigkeitsdetektionsvorrichtung gemäß einer ersten Ausführungsform,
Figur 3: eine Ansicht einer Feuchtigkeitsdetektionsvorrichtung gemäß einer zweiten Ausführungsform,

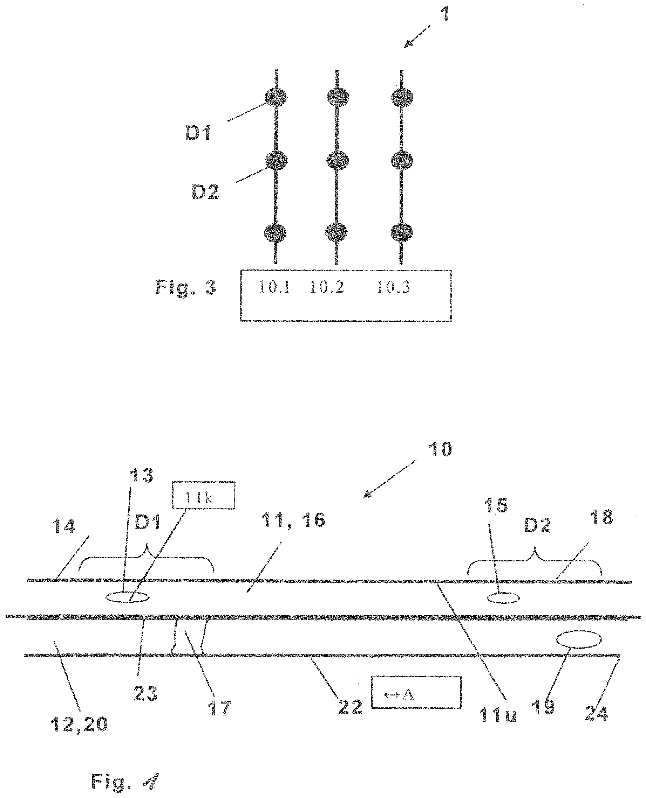

Figur 1 zeigt eine Litze 10 für eine Feuchtigkeitsdetektionsvorrichtung 1.

Die Doppellitze 10 weist zwei Einzellitzen 11, 12 auf. Die Einzellitze 11 besteht aus einem (inneren) Kupferdraht 11k und einer (äußeren) Kunststoffumhüllung 11u. Sie weist in Axialrichtung (Pfeil A) alternierend mehrere elektrisch isolierte Bereiche/Abschnitte 14, 16, 18 und dazwischen mehrere abisolierte Abschnitte/Bereichen 13, 15 auf. Jeder abisolierte Abschnitt 13, 15 wurde durch Wegschneiden der elektrischen Isolierung 11u erreicht und hat entsprechend eine ovale Form in der Ansicht.

Bei der Einzellitze 12 ist das analog mit abisolierten Abschnitten 17, 19 und isolierten Zonen/Abschnitten 20', 22, 24, wobei der nicht isolierte Bereich 17 rundum verläuft, so dass der Kupferdraht in diesem Abschnitt gar keine Isolierung aufweist. Die unterschiedliche Gestaltung des nicht isolierten Bereichs 17 erfolgt nur, um die technischen Möglichkeiten darzustellen.

Die Litzen 11, 12 verlaufen parallel zueinander und sind bei 23 miteinander verbunden, da ihre jeweilige Umhüllung 11u, 12u materialschlüssig sind. Durch den axialen Versatz (english: offset) der nicht isolierten Abschnitte 13,17 und 15,19 kommt es jedoch im Normalfall zu keinem elektrischen Kontakt zwischen den beiden Einzellitzen 11,12. Die Gesamtlitze/Doppellitze 10 weist zwei Detektionsbereiche D1 und D2 auf. Im ersten Detektionsbereich D1 sind die abisolierten Bereiche 13 und 17 angeordnet, und zwar mit einem Abstand in Axialrichtung (Pfeil A). Im zweiten Detektionsbereich D2 ist dies analog (Bereiche 15,19).

Erreicht Feuchtigkeit den Detektionsbereich D1 der Doppellitze 10, kommt es zu einer elektrischen Verbindung zwischen den abisolierten Bereichen 13, 17 der beiden Litzen 11, 12 und es kann ein messbarer Widerstand detektiert werden. Die Länge und der Abstand der Abschnitte 13, 15; 17, 19 bzw. 14, 16, 18 und 20', 22, 24 kann anwendungsspezifisch eingestellt werden. Je dichter die Bereiche zueinander vorlaufen, umso schneller spricht die Einrichtung auf Feuchtigkeit an.

Im Ausführungsbeispiel gemäß Fig. 1 beträgt die axiale Länge der abisolierten Bereiche 13, 15, 17, 19 jeweils 1 cm und die der elektrisch isolierten Abschnitte jeweils 20 cm. Die abisolierten Bereiche 13,17 und 15,19 sind axial jeweils um 2cm versetzt angeordnet.

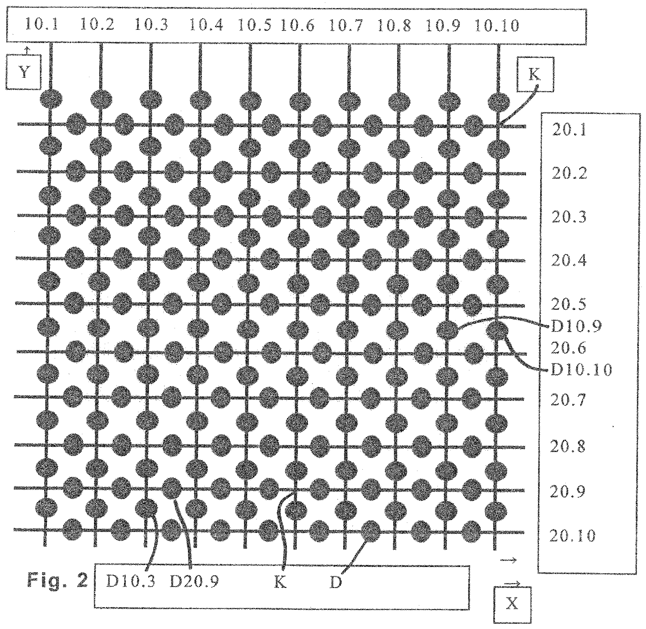

Die Abstände sind so zu wählen, dass im Normalzustand, das heißt wenn keine unerwünschte Flüssigkeit an einem oder mehreren der Detektionsbereiche auftritt, keine elektrische Verbindung besteht, um Fehlmeldungen zu vermeiden. Figur 2 zeigt eine Aufsicht auf eine Feuchtigkeitsdetektionsvorrichtung gemäß einer ersten Ausführungsform der vorliegenden Erfindung.

Die Vorrichtung ist in ein Flachdach integriert und verläuft parallel zu einer Gebäudedecke in der Wärmedämmung des Dachs. Dazu sind in der Wärmedämmung entsprechend Kanäle/Schlitze vorgesehen, in die die Leitungen/Litzen verlegt sind.

Die Vorrichtung weist eine Vielzahl an Doppellitzen 10.1...10.10 und 20.1...20.10 auf. Die Doppellitzen 10, 20 sind rasterförmig angeordnet. Die Doppellitzen 10 verlaufen parallel zueinander in Y-Richtung und sind in X-Richtung beabstandet. Die Doppellitzen 20 erstrecken sich parallel zueinander in X-Richtung (eines normalen Koordinatensystems) mit Abstand in Y-Richtung. An Knotenpunkten K liegen jeweils zwei Doppellitzen 10, 20 mit ihren isolierten Abschnitten übereinander; eine elektrische Verbindung besteht an diesen Knotenpunkten K nicht.

Jede Doppellitze 10,20 ist analog dem Beispiel zu Fig. 1 aufgebaut und weist mehrere Detektionsbereiche auf, die durch Kreise D schematisch dargestellt sind. Die Detektionsbereiche sind mit gleichem Abstand innerhalb des Rasters zueinander angeordnet. Die Detektionsbereiche sind analog wie in Fig. 1 dargestellt gestaltet.

An jedem Detektionsbereich D kann eindringende Feuchtigkeit/Flüssigkeit (insbesondere) Wasser detektiert werden, so dass eine gute Lokalisierung eines eventuellen Schadens im Dach erfolgen kann.

Die Doppellitzen 10, 20 sind mit einer nicht dargestellten Stromquelle sowie mit einer Auswerteeinrichtung verbunden. Durch die Doppellitzen 10, 20 fließt elektrischer Strom. Bei Auftreten von Flüssigkeit im Bereich mindestens einer Detektionsstelle D kann ein korrespondierender elektrischer Widerstand durch die Auswerteeinrichtung gemessen werden. Über die Auswerteeinrichtung lässt sich vor allem auch der Ort bestimmen, an dem die Feuchtigkeit auftritt, wie nachstehend beispielhaft erläutert wird.

Das Flachdach weist eine Oberfläche von 10m mal 10m auf. In y-Richtung verlaufen 10 Doppellitzen 10.1... 10.10; in x-Richtung 10 Doppellitzen 20.1....20.10, wobei parallel benachbarte Doppellitzen jeweils einen Abstand von 1 m haben... Die Doppellitzen 10.1...10.10; 20.1...20.20 kreuzen sich in Knotenpunkten K.

Falls sich beispielsweise Feuchtigkeit im Detektionsbereich D10.3 der dritten Doppellitze 10.3 befindet, wird in der Doppellitze 10.3 ein veränderter elektrischer Widerstand gemessen. Diese Messung deutet bereits darauf hin, dass sich im Bereich der Doppellitze 10.3 eine schadhafte Stelle im Dach befindet.

Falls sich ebenfalls im Detektionsbereich D20.9 der Doppellitze 20.9 Feuchtigkeit befindet, wird in der Doppellitze 20.9 ebenfalls ein erhöhter elektrischer Widerstand gemessen.

Da sich die beiden Doppellitzen 10.3, 20.9 im Knotenpunkt K überkreuzen, wird eine mögliche schadhafte Stelle im Dach in der Nähe des Knotenpunktes liegen. Damit kann eine mögliche Beschädigung im Dach ungefähr auf 1 m genau lokalisiert werden.

Figur 3 zeigt eine Draufsicht auf eine Feuchtigkeitsdetektionsvorrichtung 1 gemäß einer zweiten Ausführungsform der Erfindung, die im Bereich der Dämmung zwischen Dachsparren eingesetzt werden kann.

In dieser Ausführungsform sind drei Doppellitzen 10.1,10.2,10.3 parallel und mit 20 cm Abstand zueinander angeordnet. Die Doppellitzen sind im Wesentlichen analog Fig.1 gestaltet und bilden zusammen mit einer korrespondierenden Datenverarbeitungsanlage (Auswerteeinheit) eine Feuchtigkeitsdetektionsvorrichtung.

Die beschriebenen Ausführungsbeispiele dienen lediglich der Illustration. Die Erfindung ist nicht auf die beschriebenen Beispiele beschränkt.

## Patentansprüche

1. Verfahren zur Anordnung einer Feuchtigkeitsdetektionsvorrichtung aus mehreren Doppellitzen (10, 20) in einem Gebäudedach, mit folgenden Merkmalen:
1.1 Jede Doppellitze (10, 20) besteht aus zwei Einzellitzen (11,12) die parallel zueinander entlang einer Längsachse verlaufen,
1.2 jede Einzellitze (11,12) weist alternierend, in Axialrichtung hintereinander, elektrisch isolierte (14, 16, 18; 20', 22, 24) und elektrisch nicht isolierte Abschnitte (13, 15; 17, 19) auf, wobei die nicht isolierten Abschnitte (13, 15; 17, 19) Detektionsbereiche (D) definieren,
1.3 die Einzellitzen (11,12) werden so verlegt, dass nicht isolierte Bereiche (13, 15; 17, 19) benachbarter Einzellitzen (11,12) einer Doppellitze (10,20) in Axialrichtung der Einzellitzen (11,12) axial versetzt zueinander angeordnet sind,
1.4 die Doppellitzen (10,20) werden mit Abstand zueinander im Gebäudedach verlegt und elektrisch an eine Datenverarbeitungsanlage angeschlossen, die geeignet ist, Veränderungen verschiedener physikalischer Kennwerte, wie elektrischer Widerstand, Strom, Spannung und/oder Leitfähigkeit in den Doppellitzen (10, 20) entlang der Detektionsbereiche (D) zu erfassen und auszuwerten, um ein Eindringen von Feuchtigkeit in das Dach lokal zu orten.

2. Verfahren nach Anspruch 1, bei dem die Datenverarbeitungsanlage bereits erfasste Kennwerte speichert und mit aktuellen Kennwerten vergleicht.

3. Verfahren nach Anspruch 1, bei dem die Detektionsbereiche (D) in einer gemeinsamen Ebene angeordnet werden.

4. Verfahren nach Anspruch 1, bei dem die Detektionsbereiche (D) in einer gemeinsamen Ebene parallel zur Oberfläche des Gebäudedaches angeordnet werden.

5. Verfahren nach Anspruch 1, bei dem mehrere Doppellitzen (10, 20) parallel mit Abstand zueinander angeordnet werden.

6. Verfahren nach Anspruch 1, bei dem die Doppellitzen (10, 20) kreuzweise so verlegt werden, dass die isolierten Abschnitte (14, 16, 18; 20', 22, 24) der Einzellisten (11, 12) an Kreuzungsstellen übereinanderliegen.

7. Verfahren nach Anspruch 1, bei dem Einzellitzen (11,12) verwendet werden, deren nicht isolierte Abschnitte (13, 15; 17, 19) in Axialrichtung der jeweiligen Einzellitze (11,12) einen Abstand zwischen 0,5 und 5m aufweisen.

8. Verfahren nach Anspruch 1, bei dem Einzellitzen (11, 12) verwendet werden, deren nicht isolierte Abschnitte (13, 15; 17, 19) in Axialrichtung der jeweiligen Einzellitze (11,12) eine Länge zwischen 0,01 und 0,25m aufweisen.

9. Verfahren nach Anspruch 1, bei dem Einzellitzen (11,12) verwendet werden, deren nicht isolierte Abschnitte (13, 15; 17, 19) von diskreten Unterbrechungen in einer zugehörigen Isolierung der Einzellitze (11,12) gebildet werden.

## Claims

1. A method to arrange a device for detecting humidity in a roof of a building, said device comprising several double wires (10,20), wherein
1.1 each double wire (10, 20) consists of two single wires (11, 12), which are arranged parallel to each other in a longitudinal direction,
1.2 each single wire (11, 12) features electrically insulated and electrically non insulated sections (13, 15; 17, 19) in an alternating fashion along an axial direction, wherein the non insulated sections (13, 15; 17, 19) define detection zones (D),
1.3 the single wires (11, 12) are arranged in such a fashion, that non insulated sections (13, 15; 17,19) of adjacent single wires (11, 12) of a double wire (10, 20) are arranged axially offset to each other in the axial direction of the single wires (11, 12),
1.4 the double wires (10, 20) are laid at a distance to each other in the roof of the building and electrically coupled to a data processing unit, which is able to detect and to interpret variations of different physical parameters like electrical resistance, current, voltage and/or conductivity in the double wires (10, 20) along the detection zones (2) to locally detect ingress of humidity into the roof.

2. The method of claim 1, in which the data processing unit memorizes previously recorded parameters and compares these parameters with active parameters.

3. The method of claim 1, in which the detection zones (D) are arranged in one common plane.

4. The method of claim 1, in which the detection zones (D) are arranged in a common plane which is parallel to the roof surface of the building.

5. The method of claim 1, in which several double wires (10, 20) are arranged parallel and at a distance to each other.

6. The method of claim 1, in which the double wires (10, 20) are laid crosswise such that insulated sections (14, 16, 18; 20', 22, 24) of the single wires (11,12) overlap each other at cross points.

7. The method of claim 1, in which single wires (11,12) are used, which non insulated sections (13, 15; 17, 19) are arranged at a distance between 0,5 and 5m to each other in the axial direction of the respective single wire (11, 12).

8. The method of claim 1, in which single wires (11,12) are used, which non insulated sections (13, 15; 17, 19) present a length between 0,01 and 0,25m in the axial direction of the respective single wire (11, 12).

9. The method of claim 1, in which single wires (11, 12) are used, which non insulated sections (13, 15; 17, 19) are provided by discrete discontinuities in a respective insulation of a single wire (11, 12).

## Revendications

1. Procédé destiné à placer un dispositif détecteur d'humidité constitué de plusieurs doubles torons (10, 20) dans le toit d'un immeuble, présentant les caractéristiques suivantes :
1.1 chaque double toron (10, 20) est composé de deux torons (11, 12) individuels qui s'écoulent à la parallèle l'un de l'autre le long d'un axe longitudinal,
1.2 chaque toron individuel (11, 12) comporte en alternance, les uns derrière les autres dans la direction axiale des tronçons (14, 16, 18 ; 20', 22, 24) électriquement isolés et des tronçons (13, 15 ; 17, 19) non isolés électriquement, les tronçons (13, 15 ; 17, 19) non isolés électriquement définissant des régions détectrices (D),
1.3 on pose les torons individuels (11, 12) de telle sorte que des régions (13, 15 ; 17, 19) non isolées de torons individuels (11, 12) voisins soient placées avec un déport axial dans la direction axiale des torons individuels (11, 12),
1.4 on pose les doubles torons (10, 20) avec un écart réciproque dans le toit du bâtiment et on les connecte sur une installation de traitement de données qui est apte à détecter et à évaluer des modifications de différentes valeurs caractéristiques physiques, comme la résistance électrique, le courant, le voltage et/ou la conductibilité dans les doubles torons (10, 20) le long des régions détectrices (D), pour repérer localement une pénétration d'humidité dans le toit.

2. Procédé selon la revendication 1, lors duquel l'installation de traitement de données mémorise des valeurs caractéristiques déjà détectées et les compare avec des valeurs caractéristiques actuelles.

3. Procédé selon la revendication 1, lors duquel on place les régions détectrices (D) dans un plan commun.

4. Procédé selon la revendication 1, lors duquel ont place les régions détectrices (D) à la parallèle de la surface du toit de bâtiment.

5. Procédé selon la revendication 1, lors duquel on place plusieurs doubles torons (10, 20) à la parallèle, avec un écart réciproque.

6. Procédé selon la revendication 1, lors duquel on pose les doubles torons (10, 20) en croix de telle sorte que les tronçons (14, 16, 18 ; 20', 22, 24) isolés des torons individuels (11, 12) se superposent sur les points de croisement.

7. Procédé selon la revendication 1, lors duquel on utilise des torons individuels (11, 12) dont les tronçons (13, 15 ; 17, 19) non isolés présentent dans la direction axiale du toron individuel (11, 12) concerné un écart compris entre 0,5 et 5 m.

8. Procédé selon la revendication 1, lors duquel on utilise des torons individuels (11, 12) dont les tronçons (13, 15 ; 17, 19) non isolés présentent dans la direction axiale du toron individuel (11, 12) concerné une longueur comprise entre 0,01 et 0,25 m.

9. Procédé selon la revendication 1, lors duquel on utilise des torons individuels (11, 12) dont les tronçons (13, 15 ; 17, 19) non isolés sont formés par des interruptions discrètes dans une isolation correspondante du toron individuel (11, 12).
